# EUROPEAN PATENT SPECIFICATION

(11) **EP 3 315 843 B1**
(45) Date of publication and mention of the grant of the patent: **05.01.2022**
(21) Application number: 16196697.3
(22) Date of filing: 01.11.2016
(51) Int. Cl.: F16L 37/098

(54) **A MALE CONNECTOR FOR A COOLING PIPE AND A CONNECTION SYSTEM**
STECKVERBINDER FÜR EIN KÜHLROHR UND VERBINDUNGSSYSTEM
RACCORD MÂLE POUR TUYAU DE REFROIDISSEMENT ET SYSTÈME DE CONNEXION

(43) Date of publication of application: 02.05.2018
(73) Proprietor: Samsung SDI Co., Ltd., Giheung-gu Yongin-si, Gyeonggi-do 17084 (KR)
(72) Inventor: EICHBERGER, Georg, 8044 Graz (AT)
(74) Representative: Gulde & Partner

(56) References cited:
- EP-A2- 2 405 173
- WO-A1-2004/040185
- DE-A1-102009 035 222
- FR-A1- 2 909 715
- US-A- 4 758 023

## Description

### Field of the Invention

The present invention relates to a male connector for a cooling pipe which comprises a hollow cylindrical base part with a first and a second end, the first end having a circumferential notch for the reception of an o-ring arranged adjacent to a chamfered outer circumferential edge of the base part.

### Technological Background

Cooling pipes are used to cool a large variety of different appliances. Many of these appliances are arranged in a housing adapted to receive a cooling pipe from a cooling system, providing a fluid to the housing or to an internal cooling pipe system of the same. In the state of the art, it is common to connect a cooling pipe to a housing or to an internal cooling pipe system of the housing via a cooling interface connector which comprises at least two screws.

Such a connection requires the housing to be machined separately from the connector which additionally has to comprise bushings for the screw connection. This causes additional efford regarding the manufacturing process and unnecessarily increases the costs of a cooling system.

FR2909715A1 discloses the device has a rigid and cylindrical tubular element with an end assuring junction between the element and an opening of an oil filtering and cooling module of an internal combustion engine and another end assuring junction between the element and an inlet of a coolant pump of a cylinder case of the engine.

WO2004040185A1 discloses a joining element that is part of a fast connecting unit for hydraulic or pneumatic connecting conduits and comprises a tubular basic member, onto which two diametrically opposed, laterally spaced-apart two-legged snapping elements are formed.

DE102009035222A1 discloses that an arrangement has a plug connector detachably connected to a connecting part and comprising a spring element e.g. nose, that is pressable radially inwards during insertion into the connecting par.

US4758023 discloses that a connection assembly is particularly useful for positively connecting a flexible hose member with an inlet plug for a suction source while being adapted for subsequent disconnection without requiring any specialized tools.

EP2405173A2 discloses a quick coupling for fluid pipes, comprising: a connector with a connecting piece and at least one connecting pipe transversely projecting from said connecting piece, the connecting piece being of the type that can be introduced into a receiving opening of a counterpart in a sealing manner and brought into latching engagement with said counterpart by means of a latching means; a securing means that can be converted from a locking position in which the latching engagement is secured against unlocking to an unlocking position in which the latching engagement can be disengaged; and a fastening means to which said securing means can be fixed in at least one position.

### Summary of Invention

One or more of the drawbacks of the prior art could be avoided or at least reduced by means of the present invention, which is defined in claim 1.

In particular, a male connector for a cooling pipe is provided. The male connector comprises a hollow cylindrical base part with a first and a second end, the first end having a circumferential notch for the reception of an o-ring arranged adjacent to a chamfered outer circumferential edge of the base part. According to the invention, the base part comprises at least one elastic pin which is integrally formed with the surface of the base part. The at least one elastic pin protrudes from the surface of the base part into a direction which encloses an acute angle with the surface of the base part, the acute angle having a vertex which is pointing towards the first end of the base part. Expressed in other words, the opening of the acute angle enclosed points towards the second end of the base part.

For the connection of such a male connector with a housing or with an internal cooling pipe system of a housing, no screws are needed since the elastic pin functions as a barb, advantageously preventing the male connector from accidentially being released of a female connector of a housing or of an internal cooling pipe system of a housing. Therefore, a male connector according to the invention eases the connection of a cooling pipe with a housing or with an internal cooling pipe system of a housing and reduces the manufacturing costs of the male connector.

In a preferred embodiment, along the length of the base part, the circumferential notch is arranged in between the elastic pin and the chamfered outer circumferential edge. With such an embodiment of the male connector it is assured that the male connector enables a sealed connection with a female connector of a housing or an internal cooling pipe system of a housing, since an o-ring arranged within the circumferential notch on the first end of the base part of the male connector is inserted into the female connector before the elastic pin of the male connector engages with a corresponding means of the female connector. Preferably, the acute angle is equal to α = 5°, to α = 10°, to α = 15°, to α = 20°, to α = 25°, to α = 30°, to α = 35°, to α = 40°, to α = 45°, to α = 50°, to α = 55° or to α = 60°.

Preferably, the at least one elastic pin is the residuum of a cut-out of the base part of the male connector. Preferably, the cut-out has the shape of a saw kerf. Furthermore preferred, the cut-out substantially has the shape of a saw kerf. Preferably, the base part, especially the surface of the base part comprises a cut-out which forms the at least one elastic pin. Preferably, the at least one elastic pin is cut out of the base part, especially out of the surface of the base part. In such an embodiment of the male connector, the manufacturing of the elastic pin is eased since it can easily be cut out of the surface of the base part.

In a preferred embodiment, the hollow cylindrical base part has an inner radius rᵢ and an outer radius rₐ and wherein the cut-out of the base part of the male connector has a depth d, wherein d < rₐ - rᵢ. In such an embodiment, the cut-out does not intersect with the inner radius ri of the base part, assuring that fluid from inside of the male connector or the cooling pipe cannot exit the male connector.

Preferably, the at least one elastic pin substantially has the shape of a fin. Preferably, the at least one elastic pin substantially has the shape of a complanated fin. An elastic pin in such a shape can easily be cut out of the surface of the base part.

In a preferred embodiment, the male connector comprises two elastic pins on opposing sides of the base part. In such an embodiment, the connection between the male connector and a corresponding female connector is very stable, since in a connected state, the male connector is connected to a female connector on two opposing sides of the base part of the male connector.

According to the invention, the male connector further comprises at least one elastic T-shaped clip on the surface of the base part. In such an embodiment, the connection between the male connector and a female connector is further enhanced since the elastic T-shaped clip can additionally engage with a corresponding element provided by a female connector.

According to the invention, the T-shaped clip comprises a first arm element which extends along a direction that is perpendicular to the centerline of the male connector and a second arm element which extends along a direction which is parallel to the centerline of the male connector. Such elastic T-shaped clips can easily be actuated in order to release the male connector from a female connector.

Preferably, the at least one elastic T-shaped clip is aligned with the at least one elastic pin.

Preferably, the male connector comprises two elastic T-shaped clips on opposing sides of the base part. In such an embodiment, the stability of the connection of the male connector with a female connector is further enhanced, since not one but two elastic T-shaped clips can engage with corresponding means of a female connector on opposing sides of the base part. Furthermore, in such an embodiment, the male connector can be released from the female connector via a pinch movement peformable e.g. with two fingers of a human hand, actuating the elastic T-shaped clips simultaneously.

Furthermore, a connection system for the connection of a cooling pipe with a housing is provided. The connection system comprises a male connector according to the invention and a housing with a female connector. The female connector comprises a tube shaped circular fit with an opening within a surface of the housing. The tube shaped circular fit is adapted for the reception of a section of the base part of the male connector. The circular fit comprises at least one fixation hole adapted to engage with the elastic pin of the male connector when the section of the base part of the male connector is inserted into the female connector. With such a connection system, a stable connection between a cooling pipe and a housing or an internal cooling pipe system of the housing of an appliance can be realized.

In a preferred embodiment, the at least one fixation hole of the female connector and the at least one elastic pin of the male connector form a snap-fit connection. Preferably, the snap-fit connection is in a connected state when the section of the base part of the male connector is inserted into the female connector. Snap-fit connections are strong connections which nevertheless can easily be released. With such a connection system, no additional tools as e.g. screwdrivers are needed to fix the male connector to the female connector of the connection system or to release it again.

Preferably, the circular fit comprises two fixation holes on opposing sides of the circular fit. In such an embodiment, two elastic clips of the male connector can engage with the two fixation holes of the female connector respectively, forming a strong connection between the two elements.

The surface of the housing is a bearing surface for the at least one elastic T-shaped clip of the male connector and comprises at least one blocking means adapted to engage with the T-shaped clip. Preferably, the T-shaped clip and the blocking means are in an engaged state when the connection system is in a connected state. In such an embodiment, a rotation of the male connector within the female connector is inhibited.

Preferably, the at least one blocking means comprises two protrusions arranged adjacent to one another on the bearing surface, leaving a gap for the reception of the at least one elastic T-shaped clip in between them. Preferably, the two protrusions serve as a radial fixation of the elastic T-shaped clip when the elastic T-shaped clip and the blocking means are in an engaged state. In such an embodiment, the T-shaped clip easily engages with the blocking means when the male connector is inserted into the female connector such that the T-shaped clip is arranged inbetween the two protrusions.

In a preferred embodiment, the female connector is adapted to release the male connector when the at least one elastic T-shaped clip is actuated and the male connector is rotated simultaneously. Preferably, the female connector is adapted to release the male connector when the at least one elastic T-shaped clip is actuated and the male connector is rotated relative to the housing simultaneously. In such an embodiment, the male connector is safely connectable to the female connector of a housing and easily releasable from the female connector at the same time.

Preferably, the male connector comprises an injection molded plastic part. Preferably, the male connector is an injection molded plastic part. Preferably, the female connector comprises an injection molded plastic part. Preferably, the female connector is an injection molded plastic part. Preferably, the elastic pin and/or the elastic T-shaped clip comprises an injection molded plastic part. Preferably, the elastic pin and/or the elastic T-shaped clip is an injection molded plastic part. Preferably, the blocking means of the female connector comprises an injection molded plastic part. Furthermore preferred, the blocking means of the female connector is an injection molded plastic part. Moreover preferred, the circular fit of the female connector is an injection molded plastic part. Moreover preferred, the circular fit of the female connector comprises an injection molded plastic part.

Preferably, the male connector comprises a metal. Furthermore preferred, the male connector is made of a metal. Moreover preferred, the female connector comprises a metal or is made of a metal.

In a preferred embodiment, the elastic pin and/or the elastic T-shaped clip is integrally formed with the male connector. Furthermore preferred, the elastic pin and/or the elastic T-shaped clip forms a part of the male connector.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of an embodiment of a male connector according to the invention,
- Fig. 2: illustrates a side view of the same embodiment of the male connector,
- Fig. 3: illustrates a perspective view of a female connector of an embodiment of a connection system according to invention,
- Fig. 4: illustrates a perspective view of the embodiment of the connection system in a connected state, and
- Fig. 5: illustrates a cross sectional view of the embodiment of the connection system in a connected state.

### Detailed Description of the Invention

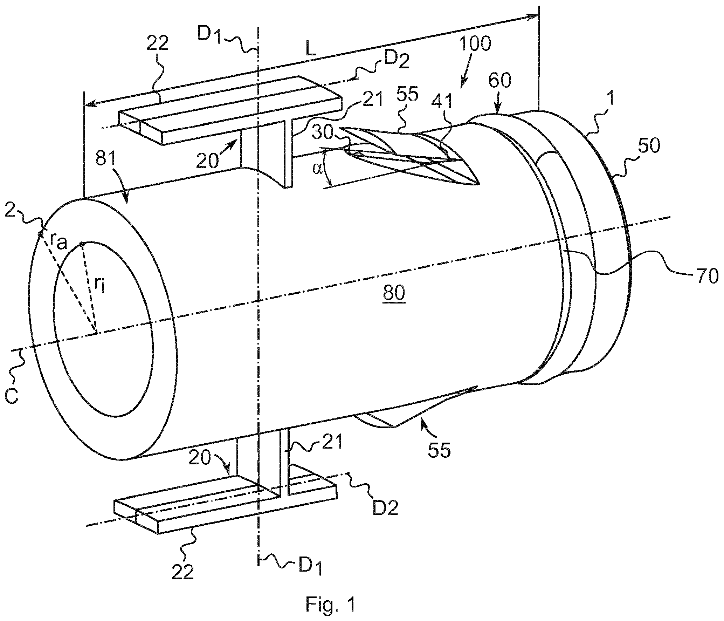

In Fig. 1, a perspective view of an embodiment of a male connector 100 for a cooling pipe according to the invention is shown. The male connector 100 comprises a hollow cylindrical base part 80 for the transport of a fluid. The male connector 100 has a first and a second end 1, 2. The base part 80 substantially has the shape of a section of a tube with a length L and an inner and an outer radius ri, ra. In Fig. 1, at the second end 2 of the hollow cylindrical base part 80, the tube is cutted for the sake of a simplification of the illustration. However, the male connector 100 can be integrally connected to a cooling pipe or a tube. Moreover, the male connector 100 can be configured to be connectable to a cooling pipe or a tube via a further connector. The first end 1 of the male connector 100 has a circumferential notch 70 for the reception of an o-ring 60 arranged adjacent to a chamfered outer circumferential edge 50 of the base part 80.

In this embodiment, the base part 80 exemplarily comprises two elastic pins 55 which are integrally formed with the surface 81 of the base part 80 and arranged on opposing sides of the base part 80. The elastic pins 55 protrude from the surface 81 of the base part 80 into a direction which encloses an acute angle α with the surface 81 of the base part 80, the angle α having a vertex 41 which is pointing towards the first end 1 of the base part 80. Expressed in other words, the elastic pins 55 protrude from the surface 81 of the base part 80 into a direction which encloses an acute angle α with the surface 81 of the base part 80 respectively, wherein the opening of the acute angle α is pointing towards the second end 2 of the base part 80. In this embodimnent, the circumferential notch 70 with the o-ring 60 therein is arranged in between the elastic pin 55 and the chamfered outer circumferential edge 50 relative to the length L of the base part 80.

In this embodiment of the male connector 100, the elastic pins 55 are the residuum of cut-outs 30 of the base part 80 of the male connector 100 respectively. The cut-outs 30 have the shape of a saw kerf which is angled relative to the surface 81 respectively, leaving the upper material of the base part 80 above the kerf - which represents a part of the surface 81 of the base part 80 - as the elastic pins 55 respectively. Each elastic pin 55 represents an elastic spring element, having a high mobility in a direction which is perpendicular relative to the surface 81 of the base part 80. The elastic pins 55 have the shape of a flattend fin respectively, sticking out of the surface 81 of the base part 80 respectively.

In this embodiment, the male connector 100 comprises two elastic pins 55. However, it is also possible to realize a male connector 100 with only one or more than two elastic pins 55, for example with three, four, five, six, seven, eight or even more than eight elastic pins 55. Furthermore, in this embodiment, the male connector 100 comprises two elastic T-shaped clips 20 on opposing sides the surface 81 of the base part 80. Along the length L of the base part 80, the elastic pins 55 and the circumferential notch 70 are arranged in between the elastic T-shaped clips 20 and the chamfered outer circumferential edge 50. Each T-shaped clip 20 comprises a first arm element 21 which extends along a direction D1 that is perpendicular to the centerline C of the male connector 100 and a second arm element 22 which extends along a direction D2 which is parallel to the centerline C of the male connector 100. Expressed in other words, the T-shaped clips 20 comprise two plates that form an elastic T-shaped structure.

In this embodiment, the male connector 100 comprises two elastic T-shaped clips 20. However, it is also possible to realize a male connector 100 with only one or more than two elastic T-shaped clips 20, for example with three, four, five, six, seven, eight or even more than eight elastic T-shaped clips 20.

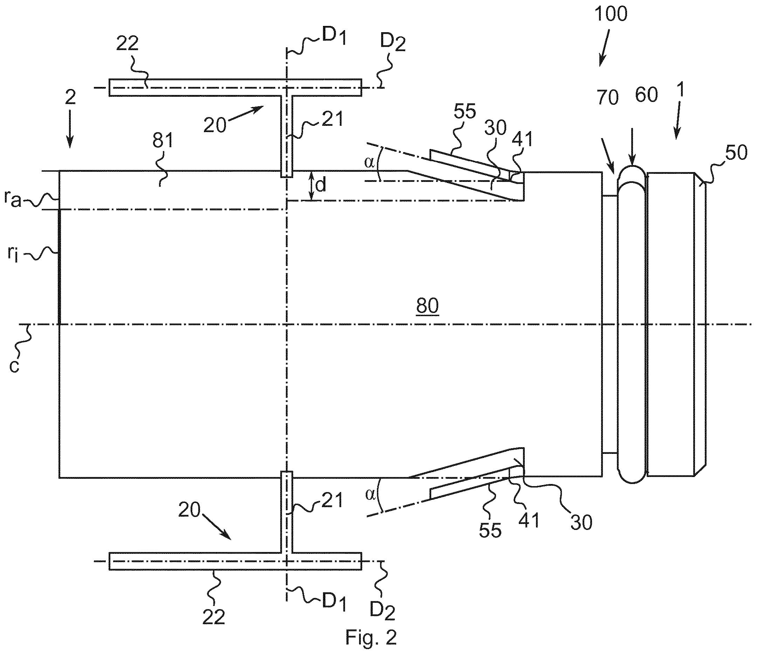

Fig. 2 illustrates a side view of the same embodiment of the male connector 100 as shown in Fig. 1. In Fig. 2 it can be seen that the cut-outs 30 of the base part 80 of the male connector 100 have a depth d respectively, wherein d < ra - ri. Therefore, the depth d of the cut-outs 30 does not intersect with the inner radius ri of the base part 80 so that a fluid within the male connector 100 cannot exit the same.

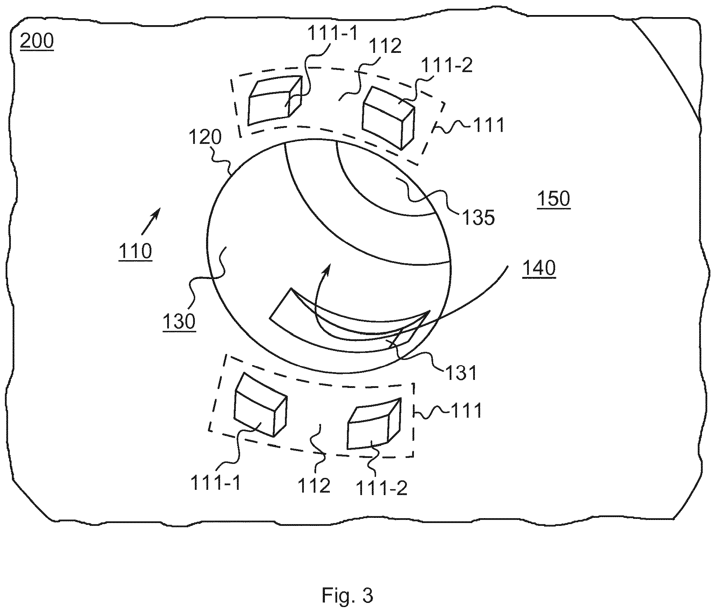

In Fig. 3, a perspective view of a female connector 140 of an embodiment of a connection system 200 for the connection of a cooling pipe with a housing 150 is illustrated. The connection system 200 comprises a male connector 100 according to the invention (not shown) and a housing 150 with a female connector 140. In this embodiment of a connection system 200, the female connector 140 is comprised by a housing 150 that exemplarily houses an appliance that needs to be cooled. However, it is also possible to realize a conncection system 200 with a female connector 140 in a housing 150 which only houses the components of the female connector 140. In this embodiment, the female connector 140 comprises a tube shaped circular fit 130 with an opening 120 within a surface 110 of the housing 150. The circular fit 130 narrows into a connection pipe 135 with a radius which is smaller than the radius of the circular fit 130 and which in this embodiment represents an end of an internal cooling system arranged within the housing 150.

The tube shaped circular fit 130 is adapted for the reception of a section of the base part 80 of the male connector 100 as shown in Fig. 1 and 2 (not shown in Fig. 3) via the opening 120. In this embodiment, the circular fit 130 exemplarily comprises two fixation holes 131 on opposing sides of the circular fit 130 adapted to engage with the elastic pins 55 of the male connector 100 respectively, when the section of the base part 80 of the male connector 100 is inserted into the female connector 140. One of the two fixation holes 131 is visible in Fig. 3 while the other fixation hole 131 is not visible due to the perspective of the illustration of the female connector 140 in Fig. 3.

In this embodiment, the surface 110 of the housing 150 which comprises the opening 120 is a bearing surface for the at least one elastic T-shaped clip 20 of the male connector 100 and exemplarily comprises two blocking means 111 adapted to engage with the T-shaped clips 20 of the male connector 100 as shown in Fig. 1 and 2. In this embodiment, the blocking means 111 both comprise two protrusions 111-1; 111-2 respectively. The protrusions 111-1; 111-2 of a blocking means 111 are arranged adjacent to one another on the bearing surface, leaving a gap 112 for the reception of an elastic T-shaped clip 20 in between them respectively.

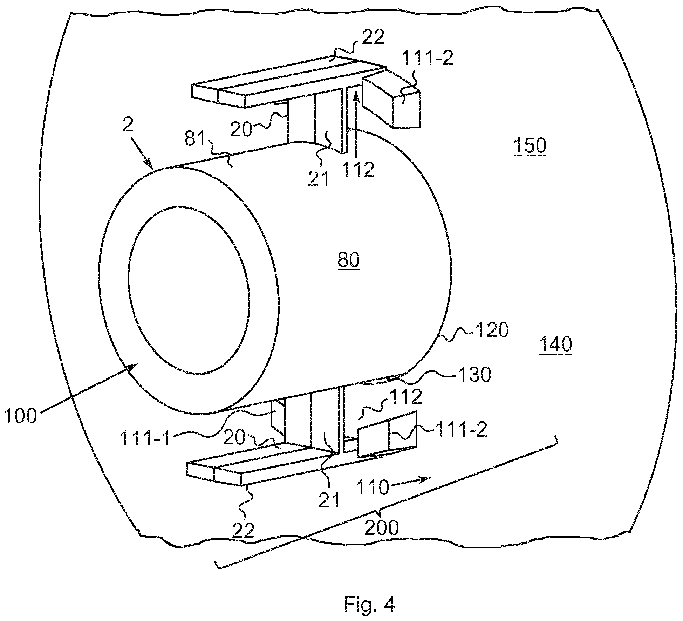

Fig. 4 illustrates a perspective view of the embodiment of the connection system 200 as shown in Fig. 3 in a connected state. Expressed in other words, Fig. 4 shows the female connector 140 as shown in Fig. 3 with a male connector 100 as shown in Fig. 1 and 2 connected thereto. In Fig. 4 it can be seen how the elastic T-shaped clips 20 of the male connector 100 are in contact with the bearing surface of the housing 150 via their respective second arm elements 22 in a connected state of the connection system 200. Furthermore it can be seen that the second arm elements 22 of the T-shaped clips 20 are arranged within the gaps 112 of the blocking means 111. In other words, the elastic T-shaped clips 20 of the male connector 100 are in an engaged state with the blocking means 111, the protrusions 111-1, 111-2 of the blocking means 111 preventing the T-shaped clips 20 and therefore the male connector 100 from rotating relative to the female connector 140.

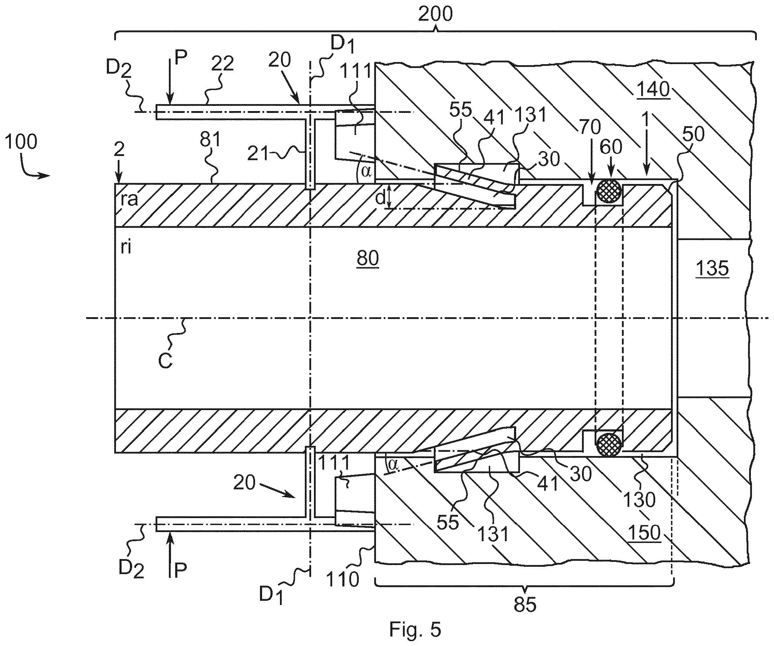

Fig. 5 shows a cross sectional view of the embodiment of the connection system 200 of Fig. 3 and 4 in a connected state. In the connected state of the connection system 200, a section 85 of the base part 80 is recepted by the circular fit 130 of the female connector 140. The elastic pins 55 of the male connector 100 are engaged with the corresponding fixation holes 131 of the female connector 140, forming a snap-fit connection respectively. Expressed in other words, the elastic clips 55 which are engaged with the corresponding fixation holes 131 function as barbs which block the male connector 100 in a longitudinal direction (along the length of the base part 80). However, as can be seen in Fig. 3, the fixation holes 131 flatten along the radius of the circular fit 130, allowing the elastic pins 55 to be rotated out of their corresponding fixation holes 131 together with the male connector 100. However, such a rotation is prohibited when the T-shaped clips 20 of the male connector 100 are engaged with the blocking means 111 of the female connector 140 as is the case in a connected state of the connection system 200.

For this reason, the female connector 140 is adapted to release the male connector 100 when the at least one elastic T-shaped clip 20 is actuated and the male connector 100 is rotated simultaneously. Such an actuation of the T-shaped clips 20 can e.g. be performed by applying a pressure to the distal end of the second arm elements 22 of the T-shaped clips 20 as in Fig. 5 is indicated by two arrows P. Such an actuation causes the second arm elements 22 to be lifted out of the gap 112 formed between the protrusions 111-1, 111-2 of the blocking means 111 and allows the male connector 100 to be rotated, releasing the elastic pins 55 from their corresponding fixation holes 131. When in such a rotated position, the male connector 100 is released from the female connector 140 and can easily be pulled out of the same.

In this embodiment, the male connector 100 and the female connector 140 exemplarily are made of an injection molded plastic. However, also other male and female connectors 100, 140 according to the invention made of other materials can be realized.

## Claims

1. A male connector (100) for a cooling pipe, comprising:
a hollow cylindrical base part (80) with a first and a second end (1, 2), the first end (1) having a circumferential notch (70) for the reception of an o-ring (60) arranged adjacent to a chamfered outer circumferential edge (50) of the base part (80);
wherein
the base part (80) comprises at least one elastic pin (55) which is integrally formed with the surface (81) of the base part (80) and protrudes from the surface (81) of the base part (80) into a direction which encloses an acute angle (α) with the surface (81) of the base part (80), the acute angle (α) having a vertex (41) which is pointing towards the first end (1) of the base part (80), and
the male connector (100) further comprises at least one T-shaped clip (20) on the surface (81) of the base part (80),
**characterized in that** the T-shaped clip (20) is elastic, and comprises a first arm element (21) which extends along a direction (D1) that is perpendicular to the centerline (C) of the male connector (100) and a second arm element (22) which extends along a direction (D2) which is parallel to the centerline (C) of the male connector (100) and is spaced from the surface (81) of the base part (80) by the first arm element (21).

2. The male connector (100) of claim 1, wherein along the length (L) of the base part (80), the circumferential notch (70) is arranged in between the elastic pin (55) and the chamfered outer circumferential edge (50).

3. The male connector (100) of any of the previous claims, wherein the at least one elastic pin (55) is the residuum of a cut-out (30) of the base part (80) of the male connector (100).

4. The male connector (100) of claim 3, wherein the hollow cylindrical base part (80) has an inner radius rᵢ and an outer radius rₐ and wherein the cut-out (30) of the base part (80) of the male connector (100) has a depth d, wherein d < rₐ - rᵢ.

5. The male connector (100) of any of the previous claims, wherein the at least one elastic pin (55) substantially has the shape of a fin.

6. The male connector (100) of any of the previous claims, comprising two elastic pins (55) on opposing sides of the base part (80).

7. The male connector (100) of claim 1, comprising two elastic T-shaped clips (20) on opposing sides of the base part (80).

8. A connection system (200) for the connection of a cooling pipe with a housing (150), comprising:
a male connector (100) of any of the claims 1 to 7;
a housing (150) with a female connector (140),
the female connector (140) comprising a tube shaped circular fit (130) with an opening (120) within a surface (110) of the housing (150), adapted for the reception of a section (85) of the base part (80) of the male connector (100), wherein the circular fit (130) comprises at least one fixation hole (131) adapted to engage with the elastic pin (55) of the male connector (100) when the section (85) of the base part (80) of the male connector (100) is inserted into the female connector (140), wherein the surface (110) of the housing (150) is a bearing surface for the at least one elastic T-shaped clip (20) of the male connector (100) and comprises at least one blocking means (111) adapted to engage with the T-shaped clip (20).

9. The connection system (200) of claim 8, wherein the at least one fixation hole (131) of the female connector (140) and the at least one elastic pin (55) of the male connector (100) form a snap-fit connection.

10. The connection system (200) of any of the claims 8 or 9, wherein the circular fit (130) comprises two fixation holes (131) on opposing sides of the circular fit (130).

11. The connection system (200) of claim 8, wherein the at least one blocking means (111) comprises two protrusions (111-1; 111-2) arranged adjacent to one another on the bearing surface, leaving a gap (112) for the reception of the at least one elastic T-shaped clip (20) in between them.

12. The connection system (200) of claim 8 or 11, wherein the female connector (140) is adapted to release the male connector (100) when the at least one elastic T-shaped clip (20) is actuated and the male connector (100) is rotated simultaneously.

## Patentansprüche

1. Ein Steckverbinder (100) für ein Kühlrohr, aufweisend:
ein hohles zylindrisches Basisteil (80) mit einem ersten und zweiten Ende (1, 2), wobei das erste Ende (1) eine umlaufende Einkerbung (70) zur Aufnahme eines o-Rings (60), die benachbart zu einem abgeschrägten Außenumfangsrand (50) des Basisteils (80) angeordnet ist, aufweist;
wobei
das Basisteil (80) zumindest einen elastischen Stift (55) aufweist, der mit der Oberfläche (81) des Basisteils (80) einstückig ausgebildet ist und von der Oberfläche (81) des Basisteils (80) in eine Richtung vorsteht, die einen spitzen Winkel (α) mit der Oberfläche (81) des Basisteils (80) einschließt, wobei der spitze Winkel (α) einen Scheitelpunkt (41) aufweist, der zum ersten Ende (1) des Basisteils (80) hin zeigt, und
der Steckverbinder (100) ferner zumindest eine T-förmige Klammer (20) auf der Oberfläche (81) des Basisteils (80) aufweist,
**dadurch gekennzeichnet, dass** die T-förmige Klammer (20) elastisch ist und ein erstes Armelement (21), das sich entlang einer Richtung (D1), die perpendikulär zur Mittellinie (C) des Steckverbinders (100) ist, erstreckt, und ein zweites Armelement (22), das sich entlang einer Richtung (D2), die parallel zur Mittellinie (C) des Steckverbinders (100) ist, erstreckt und durch das erste Armelement (21) von der Oberfläche (81) des Basisteils (80) beabstandet ist, aufweist.

2. Der Steckverbinder (100) nach Anspruch 1, wobei entlang der Länge (L) des Basisteils (80) die umlaufende Einkerbung (70) zwischen dem elastischen Stift (55) und dem abgeschrägten Außenumfangsrand (50) angeordnet ist.

3. Der Steckverbinder (100) nach einem der vorhergehenden Ansprüche, wobei der zumindest eine elastische Stift (55) der Rest eines Ausschnitts (30) des Basisteils (80) des Steckverbinders (100) ist.

4. Der Steckverbinder (100) nach Anspruch 3, wobei das hohle zylindrische Basisteil (80) einen Innenradius rᵢ und einen Außenradius rₐ aufweist und wobei der Ausschnitt (30) des Basisteils (80) des Steckverbinders (100) eine Tiefe d aufweist, wobei d < rₐ - rᵢ.

5. Der Steckverbinder (100) nach einem der vorhergehenden Ansprüche, wobei der zumindest eine elastische Stift (55) im Wesentlichen die Form einer Rippe aufweist.

6. Der Steckverbinder (100) nach einem der vorhergehenden Ansprüche, aufweisend zwei elastische Stifte (55) auf gegenüberliegenden Seiten des Basisteils (80).

7. Der Steckverbinder (100) nach Anspruch 1, aufweisend zwei elastische T-förmige Klammern (20) auf gegenüberliegenden Seiten des Basisteils (80).

8. Ein Verbindungssystem (200) zur Verbindung eines Kühlrohrs mit einem Gehäuse (150), aufweisend:
einen Steckverbinder (100) nach einem der Ansprüche 1 bis 7;
ein Gehäuse (150) mit einer Verbindungsbuchse (140),
wobei die Verbindungsbuchse (140) einen rohrförmigen kreisförmigen Passsitz (130) mit einer Öffnung (120) in einer Oberfläche (110) des Gehäuses (150), der zur Aufnahme eines Abschnitts (85) des Basisteils (80) des Steckverbinders (100) angepasst ist, aufweist, wobei der kreisförmige Passsitz (130) zumindest ein Befestigungsloch (131) aufweist, das angepasst ist, um mit dem elastischen Stift (55) des Steckverbinders (100) in Eingriff zu gelangen, wenn der Abschnitt (85) des Basisteils (80) des Steckverbinders (100) in die Verbindungsbuchse (140) eingesetzt wird, wobei die Oberfläche (110) des Gehäuses (150) eine Lagerfläche für die zumindest eine elastische T-förmige Klammer (20) des Steckverbinders (100) ist und zumindest ein Sperrmittel (111) aufweist, das angepasst ist, um mit der T-förmigen Klammer (20) in Eingriff zu gelangen.

9. Das Verbindungssystem (200) nach Anspruch 8, wobei das zumindest eine Befestigungsloch (131) der Verbindungsbuchse (140) und der zumindest eine elastische Stift (55) des Steckverbinders (100) eine Schnappverbindung ausbilden.

10. Das Verbindungssystem (200) nach einem der Ansprüche 8 oder 9, wobei der kreisförmige Passsitz (130) zwei Befestigungslöcher (131) auf gegenüberliegenden Seiten des kreisförmigen Passsitzes (130) aufweist.

11. Das Verbindungssystem (200) nach Anspruch 8, wobei das zumindest eine Sperrmittel (111) zwei Vorsprünge (111-1; 111-2) aufweist, die benachbart zueinander auf der Lagerfläche angeordnet sind, wobei sie eine Lücke (112) zur Aufnahme der zumindest einen elastischen T-förmigen Klammer (20) zwischen sich lassen.

12. Das Verbindungssystem (200) nach Anspruch 8 oder 11, wobei die Verbindungsbuchse (140) angepasst ist, um den Steckverbinder (100) freizugeben, wenn die zumindest eine elastische T-förmige Klammer (20) betätigt wird und der Steckverbinder (100) gleichzeitig gedreht wird.

## Revendications

1. Connecteur mâle (100) pour un tuyau de refroidissement, comprenant :
une partie de base cylindrique creuse (80) avec une première et une seconde extrémité (1, 2), la première extrémité (1) ayant une encoche circonférentielle (70) pour la réception d'un joint torique (60) agencé de manière adjacente à un bord circonférentiel externe chanfreiné (50) de la partie de base (80) ;
dans lequel :
la partie de base (80) comprend au moins une broche élastique (55) qui est formée de manière solidaire avec la surface (81) de la partie de base (80) et fait saillie de la surface (81) de la partie de base (80) dans une direction qui enferme un angle aigu (α) avec la surface (81) de la partie de base (80), l'angle aigu (a) ayant un sommet (41) qui est orienté vers la première extrémité (1) de la partie de base (80), et
le connecteur mâle (100) comprend en outre au moins une attache en forme de T (20) sur la surface (81) de la partie de base (80),
**caractérisé en ce que** l'attache en forme de T (20) est élastique, et comprend un premier élément de bras (21) qui s'étend le long d'une direction (D1) qui est perpendiculaire à la ligne centrale (C) du connecteur mâle (100) et un second élément de bras (22) qui s'étend le long d'une direction (D2) qui est parallèle à la ligne centrale (C) du connecteur mâle (100) et est espacé de la surface (81) de la partie de base (80) par le premier élément de bras (21).

2. Connecteur mâle (100) selon la revendication 1, dans lequel le long de la longueur (L) de la partie de base (80), l'encoche circonférentielle (70) est agencée entre la broche élastique (55) et le bord circonférentiel externe chanfreiné (50).

3. Connecteur mâle (100) selon l'une quelconque des revendications précédentes, dans lequel l'au moins une broche élastique (55) est le résidu d'une découpe (30) de la partie de base (80) du connecteur mâle (100).

4. Connecteur mâle (100) selon la revendication 3, dans lequel la partie de base cylindrique creuse (80) a un rayon interne rᵢ et un rayon externe rₐ et dans lequel la découpe (30) de la partie de base (80) du connecteur mâle (100) a une profondeur d, où d < rₐ - rᵢ.

5. Connecteur mâle (100) selon l'une quelconque des revendications précédentes, dans lequel l'au moins une broche élastique (55) a sensiblement la forme d'une ailette.

6. Connecteur mâle (100) selon l'une quelconque des revendications précédentes, comprenant deux broches élastiques (55) sur les côtés opposés de la partie de base (80) .

7. Connecteur mâle (100) selon la revendication 1, comprenant deux attaches en forme de T élastiques (20) sur les côtés opposés de la partie de base (80).

8. Système de raccordement (200) pour le raccordement d'un tuyau de refroidissement avec un boîtier (150) comprenant :
un connecteur mâle (100) selon l'une quelconque des revendications 1 à 7 ;
un boîtier (150) avec un connecteur femelle (140),
le connecteur femelle (140) comprenant un raccord circulaire en forme de tube (130) avec une ouverture (120) dans une surface (110) du boîtier (150), adaptée pour la réception d'une section (85) de la partie de base (80) du connecteur mâle (100), où le raccord circulaire (130) comprend au moins un trou de fixation (131) adapté pour se mettre en prise avec la broche élastique (55) du connecteur mâle (100) lorsque la section (85) de la partie de base (80) du connecteur mâle (100) est insérée dans le connecteur femelle (140), où la surface (110) du boîtier (150) est une surface d'appui pour l'au moins une attache en forme de T élastique (20) du connecteur mâle (100) et comprend au moins un moyen de blocage (111) adapté pour se mettre en prise avec l'attache en forme de T (20).

9. Système de raccordement (200) selon la revendication 8, dans lequel l'au moins un trou de fixation (131) du connecteur femelle (140) et l'au moins une broche élastique (55) du connecteur mâle (100) forment un raccordement par encliquetage.

10. Système de raccordement (200) selon l'une quelconque des revendications 8 ou 9, dans lequel le raccord circulaire (130) comprend deux trous de fixation (131) sur les côtés opposés du raccord circulaire (130).

11. Système de raccordement (200) selon la revendication 8, dans lequel l'au moins un moyen de blocage (111) comprend deux saillies (111-1 ; 111-2) agencées de manière adjacente entre elles sur la surface d'appui, laissant un interstice (112) pour la réception de l'au moins une attache en forme de T élastique (20) entre elles.

12. Système de raccordement (200) selon la revendication 8 ou 11, dans lequel le connecteur femelle (140) est adapté pour libérer le connecteur mâle (100) lorsque l'au moins une attache en forme de T élastique (20) est actionnée et que le connecteur mâle (100) est entraîné en rotation simultanément.
